# NOUVEAU FASCICULE DE BREVET EUROPEEN

(11) **EP 1 074 409 B2**
(45) Date de publication et mention de la décision concernant l'opposition: **05.08.2009**
(45) Mention de la délivrance du brevet: 22.02.2006
(21) Numéro de dépôt: 00460049.0
(22) Date de dépôt: 04.08.2000
(51) Int. Cl.: B60J 1/16, B60J 10/00, B60J 7/02

(54) **Dispositif d'obturation d'une baie de véhicule, à joint d'étanchéité intérieur**
In ein Fenster eingesetzte innengedichtete Fensterscheibe für ein Fahrzeug
Window panel with internal seal in an opening in a vehicle window

(30) Priorité: 06.08.1999 FR 9910384
(43) Date de publication de la demande: 07.02.2001
(73) Titulaire: Wagon SAS, 79300 Bressuire (FR)
(72) Inventeur: Bichon, M. Jacky, 79302 Bressuire (FR)
(74) Mandataire: Vidon, Patrice

(56) Documents cités:
- EP-A- 0 121 820
- EP-A- 0 778 168
- EP-A- 0 857 844
- EP-A1- 0 683 064
- DE-A- 3 246 577
- DE-U- 9 212 967
- DE-U- 29 712 859
- US-A- 5 465 531
- US-A- 5 613 323

## Description

Le domaine de l'invention est celui des baies de véhicule. Plus précisément, l'invention concerne les dispositifs d'obturation d'une baie ménagée dans la carrosserie d'un véhicule, comprenant un ensemble fixe et une partie mobile. Plus précisément encore, l'invention concerne de tels dispositifs d'obturation présentant un aspect affleurant sur la carrosserie, et pourvus d'un moins un panneau mobile. Un dispositif d'obturation comprenant les caractéristiques du préambule de la revendication 1 et de la revendication 4 est décrit dans le document JP 297 12 859 U1.

Classiquement, pour obturer la baie d'un véhicule, qu'il s'agisse d'une automobile, d'un véhicule utilitaire, d'un camion, d'un autobus ou d'un wagon de chemin de fer, on rapporte une glace, maintenue par un cadre de liaison. Ce dernier présente une partie interne et une partie externe, qui viennent pincer simultanément les bords de la glace et de l'ouverture ménagée dans la carrosserie, avec une garniture d'étanchéité.

Une autre technique est décrite dans les documents de brevets EP-0 778 168 et EP-0 857 844, au nom du même titulaire que la présente demande de brevet. Le dispositif d'obturation (appelé par la suite « baie flush ») présenté dans ces documents comprend un ensemble fixe et une partie mobile par rapport à l'ensemble fixe. La partie mobile (en un ou plusieurs éléments) est relié à l'ensemble fixe par des éléments fonctionnels qui assurent la mobilité requise et qui sont rapportés sur la face de l'ensemble fixe tourné vers l'intérieur du véhicule.

Dans la pratique, il est bien sûr nécessaire de prévoir des moyens assurant l'étanchéité entre l'ensemble fixe et la partie mobile lorsque cette dernière est en position fermée. Dans les dispositifs connus d'obturation de baies de véhicule, la glace mobile vient généralement s'encastrer dans un logement prévu à cet effet dans la carrosserie qui peut être équipé de joints ou de patins assurant l'étanchéité. Lorsque la glace mobile est coulissante, de façon à pouvoir pénétrer partiellement à l'intérieur de la porte du véhicule, un joint lécheur est en général prévu au niveau de la fente par laquelle la glace pénètre à l'intérieur de la carrosserie, pour assurer l'étanchéité.

Dans le cas des « baies flush » nouvellement développées par le déposant de la présente demande de brevet et rapidement décrit ci-dessus, ces techniques ne peuvent pas être appliquées. En effet, il n'existe pas de zones de contact entre la carrosserie et la partie mobile en position fermée. De plus, en position ouverte, l'ouverture ménagée dans la partie fixe est complètement dégagée.

Une technique particulière destinée aux « baies flush » est décrite dans la demande de brevet FR-98 10 457, non encore publiée. Selon cette technique, on prévoit un joint d'étanchéité formant un cadre, correspondant aux bords de la partie fixe définissant l'ouverture, et présentant une première partie formant cavalier, destinée à chevaucher les bords de l'ensemble fixe et une seconde partie formant au moins une lèvre d'étanchéité s'étendant vers l'ouverture, de façon à venir en contact avec la partie mobile lorsque cette dernière est en position fermée.

Cette technique est bien adaptée aux « baies flush ». Cependant, elle introduit une étape supplémentaire dans le montage du dispositif d'obturation, puisqu'il faut mettre en place le joint, qui doit venir chevaucher l'intégralité du contour de l'ouverture. Ce joint doit de plus avoir été préalablement réalisé, et notamment assemblé, pour former un cadre. Dans le cadre d'une industrialisation optimisée, il est souhaitable que de telles opérations soient supprimées, ou à tout le moins simplifiées.

Par ailleurs, les « baies flush » permettent de réaliser des parois de véhicule à l'aspect lisse, présentant un aspect esthétique et aérodynamique souvent recherché actuellement dans le domaine de la construction automobile. En effet, le principe de constructions des « baies flush » développées par le déposant de la présente demande de brevet permet d'obtenir un aspect continu, ou affleurant, entre le dispositif d'obturation et la carrosserie, sans qu'aucun élément, tel qu'un cadre de maintien, vienne perturber l'aspect continu.

Toutefois, la présence d'un joint d'étanchéité tel que d écrit ci-dessus forme systématique et un « léger » renflement, qui introduit une discontinuité d'apparence clairement non souhaitable. En effet, cette discontinuité « saute aux yeux » d'autant plus qu'il s'agit du seul élément prédominant.

L'invention a notamment pour objectif de pallier ces inconvénients de l'art antérieur.

Plus précisément, un objectif de l'invention est de fournir un dispositif d'obturation du type « baies flush », qui présente de bonnes qualités d'étanchéité, sans perturber l'aspect affleurant extérieur du dispositif.

Un autre objectif de l'invention est de fournir un tel dispositif d'obturation, qui soit aisé et peu coûteux à réaliser, au moins en ce qui concerne l'étanchéité de l'ouverture. Notamment, un objectif de l'invention est d'éviter la réalisation indépendante et le montage d'un joint venant chevaucher le pourtour de l'ouverture ménagée dans la partie fixe.

L'invention a également pour objectif de fournir un tel dispositif d'obturation, qui présente une très bonne efficacité d'étanchéité, au moins égale, et si possible supérieure, aux techniques d'étanchéité de type connu.

Ces objectifs, ainsi que d'autres qui apparaîtront par la suite, sont atteints à l'aide d'un dispositif d'obturation selon les caractéristiques de la revendication 1.

Le dispositif comprend donc un joint monté sur la face dudit dispositif d'obturation tourné vers l'intérieur dudit véhicule.

On obtient ainsi, vu de l'extérieur, un aspect parfaitement lisse pour l'ensemble de la "baie flush", sans aucun élément affleurant ou chevauchant.

Cette technique nouvelle va clairement à l'encontre des a priori de l'homme du métier, qui considère qu'il est nécessaire, pour assurer une bonne étanchéité, de boucher tout interstice de l'extérieur, de façon qu'aucun fluide ne puisse s'introduire dans cet interstice. De plus, il considère que le joint doit être conçu de façon à ne pas subir la pression du fluide (considérant un joint intérieur selon l'invention, l'homme du métier estimera directement qu'il n'est pas fiable, et que, notamment, un fluide sous pression repoussera le joint et laissera passer le fluide).

Le déposant a vérifié cependant que cela n'est pas systématiquement le cas. Au contraire, le joint de l'invention présente de très bonnes qualités d'étanchéité, du fait que l'on exploite la présence du fluide à l'intérieur du joint. Ce résultat est en particulier obtenu avec un joint d'étanchéité présentant une base essentiellement rigide, se prolongeant par au moins une lèvre d'étanchéité, dont l'extrémité se replie vers ladite base.

Le fluide s'introduisant dans le joint vient alors plaquer la lèvre contre la vitre, et donc renforcer l'étanchéité, ce qui s'avère très efficace.

De façon préférentielle, ladite base et ladite lèvre sont réalisées en des matériaux différents, ladite lèvre étant souple, et ladite base étant plus rigide.

Selon un mode de fabrication et de montage avantageux, au moins la base dudit joint d'étanchéité est formée par moulage.

Selon une première variante de l'invention, on prévoit que ledit joint d'étanchéité présente au moins deux lèvres d'étanchéité.

L'invention concerne également le procédé de fabrication d'un dispositif tel que décrit ci-dessus. Selon ce procédé, on forme donc sur la face dudit dispositif d'obturation tourné vers l'intérieur du véhicule un joint d'étanchéité entre un bord dudit ensemble fixe et un bord de ladite partie mobile.

Ce procédé comprend donc notamment les étapes de la revendication 4.

D'autres caractéristiques et avantages de l'invention apparaîtront plus clairement à la lecture de la description à l'aide d'un mode de réalisation préférentiel de l'invention donnée à titre de simples exemples illustratifs et non limitatifs, et des dessins annexés parmi lesquels :
- la figure 1 illustre un exemple de dispositif d'obturation de type « baie flush », auquel l'invention peut avantageusement s'appliquer ;
- la figure 2 présente, en coupe, un mode de réalisation du joint d'étanchéité de l'invention ;
- la figure 3 présente une variante de joint d'étanchéité, présentant respectivement une double lèvre.

Le dispositif d'obturation d'une baie selon l'invention est prévu pour équiper un véhicule. Il est destiné à être rapporté sur une ouverture ménagée dans la carrosserie du véhicule. Une telle ouverture peut être réalisée sur une paroi latérale du véhicule, le pavillon... Elle peut être plane, ou incurvée de façon à suivre la carrosserie.

Ce dispositif d'obturation est par exemple du type décrit dans les documents de brevet EP-0 778 168 et EP-0 857 844 déjà mentionnés. Bien que, par la suite, on décrive un dispositif d'obturation dont l'ensemble mobile se déplace par coulissement, il est clair que l'invention s'applique plus généralement à tous les types de « baies flush », et notamment aux « baies flush » dont la partie mobile est montée basculante.

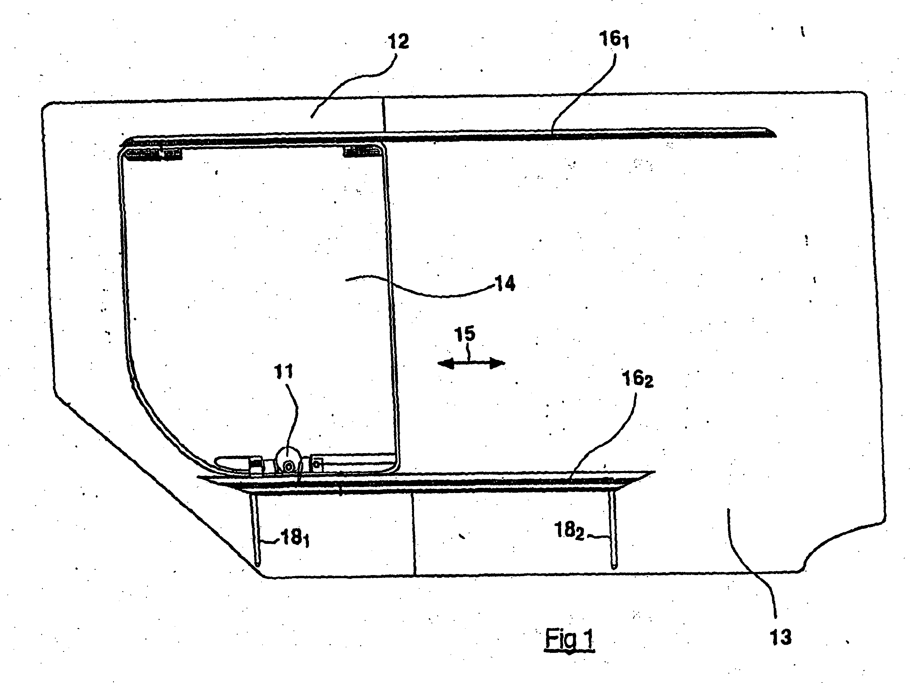

Dans l'exemple illustré en figure 1, le dispositif d'obturation comprend un ensemble fixe constitué d'un premier élément 12 en forme générale de C (dont intérieur définit au moins partiellement l'ouverture ménagée dans la baie). Cet élément 12 porte des rails de coulissement 16₁ et 16₂ recevant la partie mobile 14, qui s'étendent parallèlement, dans le prolongement des deux extrémités du C. L'ensemble fixe comprend encore un second élément 13, venant prendre place sur ces rails 16₁ et 16₂, et définissant le quatrième côté de l'ouverture.

L'élément 12 en forme de C peut être indifféremment être réalisé en une ou plusieurs parties. Par ailleurs, la forme générale de la partie mobile est ici considérée, par simplification, comme étant essentiellement rectangulaires. Il est clair cependant qu'elle peut être de forme quelconque, en fonction notamment de contraintes techniques et/ou esthétiques.

Lorsque la partie mobile 14 est en position d'obturation, l'ensemble du dispositif se trouve dans un plan unique. La poignée 11 assure le verrouillage de la partie mobile dans cette position.

Avantageusement, le mouvement de la partie mobile 14 par rapport à la partie fixe 12, 13 est décomposée en deux déplacements indépendants :
- un déplacement perpendiculaire par rapport au plan formé par la partie fixe, permettant le passage d'une position fermée, et verrouillée, dans laquelle la partie mobile se trouve dans le même plan que la partie fixe, et obture l'ouverture, à une position de libération, dans laquelle la partie mobile est décalée dans un plan de coulissement, par rapport à la partie fixe, de façon à permettre le coulissement.
   Lors du passage de la position d'obturation à la position de libération, on notera que, dans le mode de réalisation particulier décrit par la suite, la partie mobile est légèrement décalée vers le bas, par rapport à l'ouverture ;
- un déplacement 15 parallèle au plan formé par la partie fixe, dans le plan de coulissement.

Bien sûr, d'autres mouvements sont possibles. Par exemple, la partie mobile peut suivre une courbe selon laquelle les deux mouvements (verrouillage/déverrouillage et coulissement) sont liés.

La poignée 11 (qui peut avoir un mouvement de rotation ou un mouvement de translation) permet d'assurer d'une part le changement de plan, par exemple à l'aide d'un plan incliné, et d'autre part le coulissement.

Bien que dans l'exemple illustré en figure 1, la baie soit plane et rectangulaire, il est clair que l'invention s'applique également à tout autre type d'ouverture. Notamment, la glace 14 peut être bombée, incurvée et/ou d'une forme quelconque.

Par ailleurs, le dispositif de l'invention s'applique notamment aux parois latérales d'un véhicule. Cependant, il peut également être mis en oeuvre sur le pavillon d'un véhicule, et plus généralement en tout emplacement où cela serait souhaitable.

La glace 14 peut être en verre ou en un matériau transparent ou translucide adapté. Elle peut également être réalisée dans le même matériau que la carrosserie. On notera également qu'il est possible d'utiliser plusieurs glaces indépendantes pour obturer une baie (par exemple une glace se déplaçant vers la gauche et l'autre vers la droite). Le cas échéant, l'une des glaces peut être fixe.

Comme indiqué précédemment, l'invention propose une technique nouvelle pour assurer l'étanchéité entre la partie mobile et l'ensemble fixe d'une « baie flush », selon laquelle un joint d'étanchéité est réalisé sur la face tournée vers l'intérieur du véhicule du dispositif d'obturation. Cet approche est tout à fait nouvelle, et va clairement à l'encontre des a priori de l'homme du métier. En effet, il n'est pas proposé de fermer, de l'extérieur, l'interstice entre les deux éléments considérés, mais au contraire de laisser pénétrer les fluides à l'intérieur de cet interstice et de contrôler l'écoulement de ces fluides. De préférence, on exploite même la présence de ces fluides pour renforcer l'étanchéité.

Lorsque la partie mobile se décale vers l'intérieur, ainsi que cela est illustré en figure 1, le joint est donc monté sur la partie mobile 14, et la lèvre d'étanchéité vient en contact avec la partie fixe.

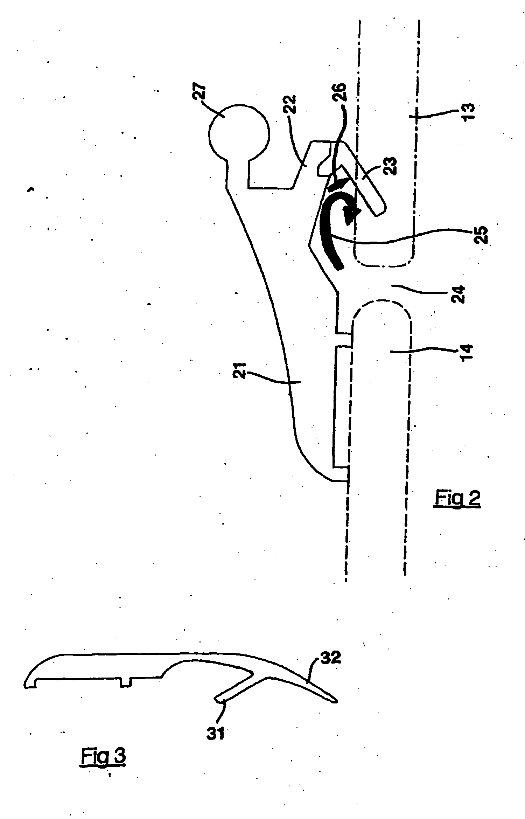

La figure 2 présente, en coupe, un mode de réalisation d'un tel joint. On distingue la base 21 du joint, qui est solidarisée au bord de la partie mobile 14, et qui présente une partie de support 22, s'étendant au-delà de l'interstice de la partie mobile 14 et la partie fixe 12 ou 13. Cette partie support 22 porte la lèvre d'étanchéité 23, qui revient vers l'interstice 24.

La base 21 est réalisée, par exemple par moulage, en un plastique rigide ou du caoutchouc dur. La lèvre 23 est bien sûr souple. Elle est par exemple réalisée en plastique élastomère ou un caoutchouc souple.

La base 21 doit être rigide, de façon à ne pas se déformer sous les efforts de fermeture. En revanche, la lèvre d'étanchéité 23 doit être souple pour se conformer à la vitre 13, et avoir une bonne rémanence dans le temps (c'est-à-dire qu'il ne doit pas perdre sa souplesse ni son ressort après exposition à la lumière, à la température,...).

Lorsqu'un fluide, pénètre dans l'interstice 24, il suit un trajet symbolisé par la flèche 25. Il applique en conséquence une force, symbolisée par la flèche 26, sur la lèvre 23, qui a pour effet de plaquer celle-ci contre la partie fixe 13, et donc de renforcer l'étanchéité assurée par la lèvre 13.

Selon l'invention, on exploite donc la présence d'un fluide pour améliorer l'étanchéité.

Le joint de l'invention forme un cadre unique, correspondant au périmètre de l'ouverture. Il est donc aisément mis en place et fixé.

Préférentiellement, la base 21 est formée par moulage, directement sur la partie mobile 14. La fabrication en est alors très simple, et le joint peut être effectué simultanément au moulage d'autres pièces.

Par ailleurs, avantageusement, on prévoit le moulage dans la même pièce que la base 21 de moyens permettant la solidarisation et le guidage de la partie mobile aux rails montés sur la partie fixe. Dans l'exemple illustré, il s'agit d'une rotule 27, qui vient prendre place dans une pièce complémentaire prévue à cet effet dans les rails de guidage.

Il s'agit donc, sur la figure 2, d'une coupe du joint sur sa partie horizontale (coïncidant avec les rails). Les parties verticales comprennent bien sûr pas de rotule 27.

Lorsque le liquide pénètre par l'interstice 24, il ne peut donc pas pénétrer à l'intérieur du véhicule. Il se peut en revanche qu'il en subsiste à l'intérieur du logement défini par la base 21 et la lèvre 23. Dans ce cas, le liquide est naturellement guidé vers le bas, et des moyens sont prévus pour le diriger vers le rail inférieur 16₂, qui possède des canules 18₁, 18₂, qui permettent l'évacuation des liquides le long de la carrosserie. Ces canules sont conçues de façon à s'étendre au-delà du cordon de colle permettant la solidarisation du dispositif d'obturation sur la carrosserie.

D'autres modes de réalisation du joint intérieur selon l'invention peuvent être envisagés. A titre d'exemple, la figure 3 illustre un joint présentant une double lèvre 31, 32. La seconde lèvre 32 ajoute une sécurité, dans le cas où la première lèvre s'avèrerait malgré tout insuffisante.

## Revendications

1. Dispositif d'obturation d'une baie ménagée dans la carrosserie d'un véhicule, du type comprenant un ensemble fixe (12, 13), destinée à être rapporté sur ladite carrosserie, et une partie mobile (14) guidée par deux rails montés sur l'ensemble fixe (12, 13), venant fermer ou libérer une ouverture ménagée dans ledit ensemble fixe (12, 13), ledit ensemble fixe (12, 13) et ladite partie mobile (14) se trouvant dans un même plan, en position fermée, le dispositif d'obturation comprenant en outre un joint d'étanchéité présentant une base (21) fixée sur la partie mobile (14) et essentiellement rigide, se prolongeant par au moins une lèvre d'étanchéité (23 ; 31),
**caractérisé en ce que** l'extrémité libre (23 ; 31) de la lèvre d'étanchéité vient en contact avec la face dudit ensemble fixe (12, 13) tournée vers l'intérieur dudit véhicule et se replie vers ladite base, de façon que tout fluide pénétrant entre ladite partie mobile et ledit ensemble fixe agisse (25) sur l'extrémité libre (23 ; 31) dudit joint, de façon à plaquer (26) cette dernière contre l'élément sur lequel elle assure l'étanchéité, de façon à renforcer celle-ci,
ledit joint d'étanchéité (21, 23) formant un cadre coïncidant avec le périmètre de ladite ouverture, et étant conçu de façon à diriger au moins une partie des liquides vers des moyens d'évacuation (18₁, 18₂) prévus à cet effet,
lesdits moyens d'évacuation (18₁, 18₂) étant formés dans au moins un élément de support et/ou de guidage (16₂) de ladite partie mobile, et ledit ensemble fixe porte, sur sa face tournée vers l'intérieur dudit véhicule, au moins un élément de support et/ou de guidage (16₁, 16₂) de ladite partie mobile (14), et **en ce que** ladite base (21) présente une rotule de liaison (27) avec ledit élément de support et/ou de guidage (16₁, 16₂).

2. Disposition d'obturation selon la revendication 1, **caractérisé en ce que** ladite base (21) et ladite lèvre (23 ; 31) sont réalisées en des matériaux différents, ladite lèvre (23) étant souple, et ladite base (31) étant plus rigide.

3. Dispositif d'obturation selon l'une quelconque des revendication 1 et 2, **caractérisé en ce que** ledit joint d'étanchéité présente au moins deux lèvres d'étanchéité (31, 32).

4. Procédé de fabrication d'un dispositif d'obturation d'une baie ménagée dans la carrosserie d'un véhicule, du type comprenant un ensemble fixe (12, 13) destiné à être rapporté sur ladite carrosserie et une partie mobile (14) guidée par deux rails montés sur l'ensemble fixe (12, 13) pouvant venir obturer ou libérer une ouverture dans ledit ensemble fixe (12,13),
**caractérisé en ce qu'**il comprend les étapes de :
- réalisation d'un joint d'étanchéité (21, 23) formant un cadre coïncidant avec le périmètre de ladite ouverture, et présentant une base (21) fixée sur la partie mobile (14), essentiellement rigide, se prolongeant par au moins une lèvre d'étanchéité (23 ; 31), dont l'extrémité vient en contact avec la face dudit ensemble fixe (12, 13) tournée vers l'intérieur dudit véhicule et se replie vers ladite base, de façon que tout fluide pénétrant entre ladite partie mobile et ledit ensemble fixe agisse (25) sur l'extrémité libre (23 ; 31) dudit joint, de façon à plaquer (26) cette dernière contre l'élément sur lequel elle assure l'étanchéité, de façon à renforcer celle-ci, ledit joint étant en outre conçu de façon à diriger au moins une partie des liquides vers des moyens d'évacuation (18₁, 18₂) prévus à cet effet au moins la base (21) dudit joint d'étanchéité étant formée par moulage, et présentant une rotule de liaison (27) avec un élément de support et/ou de guidage (16₁, 16₂),
- réalisation desdits rails (16₁, 16₂) dont un rail (16₂) dans lequel sont formés lesdits moyens d'évacuation (18₁, 18₂).
- montage dudit joint d'étanchéité (21, 23) formant cadre sur ladite partie mobile.

5. Procédé selon la revendication 4, **caractérisé en ce qu'**on moule simultanément, dans une même pièce, ledit joint d'étanchéité (21) et des moyens de solidarisation (27) de ladite partie mobile à au moins un élément de support et/ou de guidage.

## Claims

1. Device for closing an opening which is provided in the bodywork of a vehicle, of the type comprising a fixed assembly (12, 13) which is designed to be added onto the bodywork, and a mobile part (14) which is guided by two rails which are fitted onto the fixed assembly (12, 13), and which closes or opens an opening which is provided in the fixed assembly (12, 13), the fixed assembly (12, 13) and the mobile part (14) being on the same plane in the closed position, the closing device additionally comprising a seal with a base (21) which is secured to the mobile part (14), is substantially rigid, and is extended by at least one sealing lip (23; 31),
**characterised in that** the free end (23; 31) of the sealing lip comes into contact with the surface of the fixed assembly (12, 13) which faces towards the interior of the said vehicle, and is folded towards the said base, such that any fluid which penetrates between the mobile part and the fixed assembly acts (25) on the free end (23; 31) of the seal, such as to position (26) the latter against the element on which it provides the sealing, so as to reinforce the latter,
the seal (21, 23) forming a frame which coincides with the perimeter of the opening, and being designed such as to direct at least part of the fluids towards discharge means (18₁, 18₂) which are provided for this purpose,
the discharge means (18₁, 18₂) being formed in at least one support and/or guide element (16₂) of the mobile part,
and the fixed assembly bears, on its surface which faces towards the interior of the said vehicle, at least one support and/or guide element (16₁, 16₂) of the said mobile part (14),
and **in that** the base (31) has a ball joint (27) for connection to the support and/or guide element (16₁, 16₂).

2. Closing device according to claim 1, **characterised in that** the base (21) and the lip (23; 31) are made of different materials, the lip (23) being flexible, and the base (31) being more rigid.

3. Closing device according to either of claims 1 and 2, **characterised in that** the seal has at least two sealing lips (31, 32).

4. Method for production of a device for closing an opening which is provided in the bodywork of a vehicle, of the type comprising a fixed assembly (12, 13) which is designed to be added onto the bodywork, and a mobile part (14) which is guided by two rails which are fitted onto the fixed assembly (12, 13), and which can close or open an opening in the said fixed assembly (12, 13),
**characterised in that** it comprises the steps of:
- producing a seal (21, 23) which forms a frame that coincides with the perimeter of the opening, and has a base (21) which is secured to the mobile part (14), is substantially rigid, and is extended by at least one sealing lip (23; 31), the end of which comes into contact with the surface of the fixed assembly (12, 13) that faces towards the interior of the vehicle, and is folded towards the base, such that any fluid which penetrates between the mobile part and the fixed assembly acts (25) on the free end (23; 31) of the seal, such as to position (26) the latter against the element on which it provides the sealing, so as to reinforce the latter, the seal additionally being designed so as to direct at least part of the fluids towards discharge means (18₁, 18₂) provided for this purpose, at least the base (21) of the seal being formed by moulding, and having a ball joint (27) for connection to a support and/or guide element (16₁, 16₂);
- production of the rails (16₁, 16₂), including one rail (16₂) in which the discharge means (18₁, 18₂) are formed; and
- fitting of the seal (21, 23) which forms a frame, onto the mobile part.

5. Method according to claim 4, **characterised in that** there is moulding, simultaneously in a single piece, of the seal (21) and of means (27) for rendering the said mobile part integral with at least one support and/or guide element.

## Patentansprüche

1. Vorrichtung zum Verschließen einer in der Karosserie eines Fahrzeuges befindlichen Öffnung, von der Art, die eine feststehende Gruppe (12, 13), welche auf die besagte Karosserie aufgebracht werden soll sowie ein bewegliches Teil (14) umfasst, welches von zwei Schienen geführt wird, die auf der feststehenden Gruppe (12, 13) montiert sind, wobei das bewegliche Teil eine in der besagten feststehenden Gruppe (12, 13) befindliche Öffnung schließt oder freigibt, wobei die feststehende Gruppe (12, 13) und das bewegliche Teil (14) sich in der geschlossenen Position in derselben Ebene befinden und wobei die Vorrichtung zum Verschließen darüber hinaus eine Dichtung umfasst, die eine Basis (21) aufweist, welche an dem beweglichen Teil (14) befestigt ist und im Wesentlichen starr ist, wobei die Dichtung durch mindestens eine Dichtlippe (23; 31) verlängert wird,
**dadurch gekennzeichnet, dass** das freie Ende (23, 31) der Dichtlippe in Berührung mit der zum Inneren des besagten Fahrzeuges gewandten Fläche der feststehenden Gruppe (12, 13) kommt und in Richtung auf die besagte Basis zurückgefaltet ist, so dass jede Flüssigkeit, die zwischen dem besagten beweglichen Teil und der besagten feststehenden Gruppe eindringt auf das freie Ende (23; 31) der Dichtung wirkt (25), um diese gegen das Element zu drücken (26), auf dem sie die Dichtungsfunktion ausübt, um diese somit zu verstärken,
wobei die Dichtung (21, 23) einen Rahmen bildet, der mit dem Umfang der besagten Öffnung übereinstimmt und derart konzipiert ist, dass mindestens ein Teil der Flüssigkeiten zu Ablaufmitteln (18_{1,} 18₂) geführt werden, die zu diesem Zweck vorgesehen sind, wobei diese Ablaufmittel (18₁, 18₂) in mindestens einem Stütz- und/oder Führungselement (16₂) des besagten beweglichen Teils ausgebildet sind und wobei das besagte feststehende Element auf der zum Inneren des besagten Fahrzeugs hin gewandten Fläche mindestens ein Stütz- und/oder Führungselement (16₁, 16₂) des beweglichen Teils (14) trägt und **dadurch**, dass die Basis (21) ein Kugelgelenk (27) mit dem Stütz- und/oder Führungselement (16₁, 16₂) trägt.

2. Vorrichtung zum Verschließen nach Anspruch 1, **dadurch gekennzeichnet, dass** die Basis (21) und die Lippe (23; 31) aus verschiedenen Werkstoffen hergestellt sind, wobei die Lippe (23) biegsam ist, während die Basis (31) starrer ist.

3. Vorrichtung zum Verschließen nach einem der Ansprüche 1 oder 2, **dadurch gekennzeichnet, dass** die besagte Dichtung mindestens zwei Dichtlippen (31, 32) aufweist.

4. Herstellungsverfahren für eine Vorrichtung zum Verschließen einer in der Karosserie eines Fahrzeuges befindlichen Öffnung, von der Art, die eine feststehende Gruppe (12, 13), welche auf die besagte Karosserie aufgebracht werden soll, sowie einen beweglichen Teil (14) umfasst, welcher von zwei Schienen geführt wird, die auf der feststehenden Gruppe (12, 13) montiert sind, wobei der bewegliche Teil eine in der besagten feststehenden Gruppe (12, 13) befindlichen Öffnung schließt oder freigibt,
**dadurch gekennzeichnet, dass** es die folgenden Schritte umfasst:
- Realisierung einer Dichtung (21, 23), die einen Rahmen bildet, der mit dem Umfang der besagten Öffnung übereinstimmt und eine Basis (21) aufweist, die auf den beweglichen Teil (14) befestigt ist und im Wesentlichen starr ist, wobei die Dichtung durch mindestens eine Dichtlippe (23; 31) verlängert wird, deren Ende in Berührung mit der zum Inneren des besagten Fahrzeuges gewandten Fläche der feststehenden Gruppe (12, 13) kommt und in Richtung auf die besagte Basis zurückgefaltet ist, so dass jede Flüssigkeit, die zwischen dem besagten beweglichen Teil und der feststehenden Gruppe eindringt auf das freie Ende (23; 31) der Dichtung (31) wirkt (25), um diese gegen das Element zu drücken (26), auf dem sie die Dichtungsfunktion ausübt, um diese somit zu verstärken, wobei die besagte Dichtung darüber hinaus derart konzipiert ist, dass mindestens ein Teil der Flüssigkeiten zu Ablaufmittel (18₁, 18₂) geführt werden, die zu diesem Zweck vorgesehen sind, wobei mindestens eine Basis (21) der besagten Dichtung durch Formen gebildet wird und ein Kugelgelenk (27) mit einem Stütz- und/oder Führungselement (16₁, 16₂) aufweist,
- Realisierung der Schienen (16₁, 16₂), davon eine Schiene (16₂) in der die besagten Ablaufmittel (18₁, 18₂) ausgebildet sind,
- Montage der Dichtung (21, 23), die einen Rahmen auf dem besagten beweglichen Teil bildet.

5. Verfahren nach Anspruch 4, **dadurch gekennzeichnet, dass** die Dichtung (21) und die Verbindungsmittel (27) des besagten beweglichen Teils mit mindestens einem Stütz- und/oder Führungselement gleichzeitig in einem selben Teil geformt werden.
